# EUROPÄISCHE PATENTSCHRIFT

(11) **EP 1 218 970 B1**
(45) Veröffentlichungstag und Bekanntmachung des Hinweises auf die Patenterteilung: **12.03.2003**
(21) Anmeldenummer: 00979399.3
(22) Anmeldetag: 29.09.2000
(51) Int. Cl.: H01R 9/24, H04Q 1/14, H05K 7/18

(54) **KONTAKTBAUTEIL FÜR EINEN VERTEILER IN EINER TELEKOMMUNIKATIONSANLAGE**
CONTACT COMPONENT FOR A DISTRIBUTOR IN A TELECOMMUNICATION SYSTEM
ELEMENT DE CONTACT POUR UN REPARTITEUR MONTE DANS UNE INSTALLATION DE TELECOMMUNICATION

(30) Priorität: 30.09.1999 DE 19947089
(43) Veröffentlichungstag der Anmeldung: 03.07.2002
(73) Patentinhaber: CCS Technology, Inc., Wilmington, DE 19803 (US)
(72) Erfinder: DESCY, Jack, Brighton, VIC 3186 (AU); ZIMMER, Rainer, 58579 Schalksmühle (DE); HORN, Tom, Rowville, VIC 3178 (AU); BREUER, Mike, 56065 Hamm (DE); NATH, Torsten, 10367 Berlin (DE)
(74) Vertreter: Sturm, Christoph, Dipl.-Ing.
(86) Internationale Anmeldenummer: DE0003474
(87) Internationale Veröffentlichungsnummer: WO01024317

(56) Entgegenhaltungen:
- DE-U- 29 515 984
- US-A- 4 641 225
- US-A- 5 115 377

## Beschreibung

Die Erfindung bezieht sich auf ein Kontaktbauteil für einen Verteiler in einer Telekommunikationsanlage, wobei das längliche Kontaktbauteil mit frontseitig bedienbaren Reihen von Anschlußelementen für ankommende und abgehende elektrische Leitungen versehen ist.

Ein derartiges Kontaktbauteil ist z.B. durch die EP 0 321 743 A2 bekannt geworden. Danach sind zumindest die abgehenden Leitungen als einzeln verlegbare Rangierdrähte ausgebildet, die von den Anschlußelementen durch einen mittleren Drahtführungskanal zu den schmalen Stirnseiten des Kontaktbauteils geführt sind, von wo aus sie zu anderen Bereichen des Verteilers verlaufen. Der mittlere Draht führungskanal ist in seiner Tiefe durch die Kontaktteile begrenzt, an deren äußeren Enden die Anschlußelemente ausgebildet sind, dadurch wird er so breit, daß sich die entsprechende Breite der Kontaktbauteile vergrößert.

Zum Beispiel durch die DE 39 21 224 A1 ist es bekannt, seitlich der Kontaktbauteile gekrümmte Drahtführungskanäle auszubilden, durch die die Leitungsenden von der Stirnseite her durchgeschoben werden können. Da sich der Querschnitt der Kanäle im Bereich der schmalen Stirnseite verringert, ist das Einfädeln der Drahtenden entsprechend diffizil, was die Handhabung erschwert.

US-A-5 115 377 beschreibt ein Bauteil gemäß dem Oberbegriff des Anspruchs 1.

Der Erfindung liegt die Aufgabe zugrunde, Führungsmittel für die Rangierdrähte zu schaffen, die ein schnelles Handhaben der Rangierdrähte bei geringer Breite der Kontaktbauteile ermöglichen.

Diese Aufgabe wird durch die Erfindung gemäß Anspruch 1 gelöst. Der nach oben offene Drahtführungskanal ist nun seitlich der Anschlußelementereihen ausgebildet. Er kann nun bis zum hinteren Ende der Kontaktbauteile, also erheblich tiefer und entsprechend schmaler ausgebildet werden. Durch die Tiefe des Kanals erfahren die Rangierdrähte eine weniger scharfe Umlenkung zur Stirnseite hin, was die Zuordnung zu den Anschlußelementen erleichtert. Der taschenartig angesetzte Führungskanal läßt sich mit einfachen spritzgußtechnischen Mitteln ausbilden.

Durch eine vorteilhafte Weiterbildung der Erfindung nach Anspruch 2 wird die Zuordnung der Rangierdrähte zu den Anschlußelementen weiter verbessert. Die Führung der Rangierdrähte ist hier in zwei den verschiedene Koordinatenrichtungen zugeordnete Abschnitte mit getrennten Führungsmitteln unterteilt.

Durch die Weiterbildung nach Anspruch 3 können die Rangierdrähte durch einen zwischen den Führungselementen und dem Winkelprofil verbleibenden Spalt sicher eingelegt werden.

Im folgenden wird die Erfindung anhand eines in der Zeichnung dargestellten Ausführungsbeispiels näher erläutert.

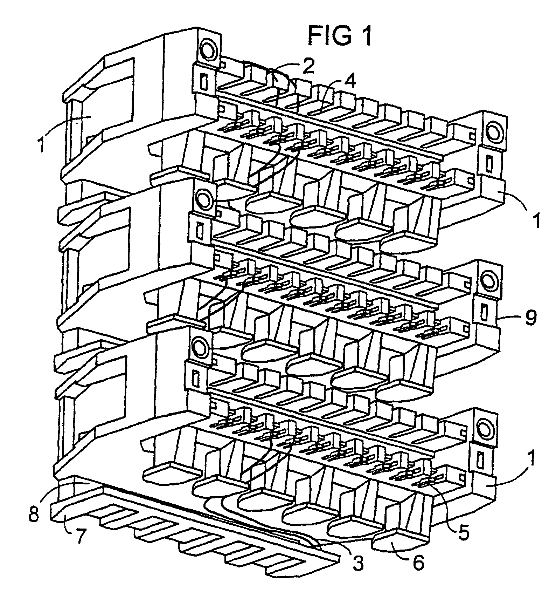

Figur 1 zeigt eine perspektivische Ansicht mehrerer stapelartig übereinander angeordneter Kontaktbauteile 1 zum Anschließen und Verbinden von ankommenden Leitungen 2 und abgehenden Leitungen 3. Jedes Kontaktbauteil weist eine Reihe von hier verdeckt angeordneten Anschlußelementen 4 für die ankommenden Leitungen 2 und eine weitere Reihe von Anschlußelementen 5 für die abgehenden Leitungen 3 auf. Zwei jeweils paarweise einander gegenüberliegende Anschlußelemente 4, 5 sind im Inneren des Kontaktbauteils miteinander verbunden. Die abgehenden Leitungen 3 sind hier als Rangierleitungen ausgebildet, die von den entsprechenden Anschlußelementen 5 aus zu anderen Bereichen des Verteilers ungebündelt verlegt sind. Die Anschlußelemente 4, 5 befinden sich auf der für die Bedienung frei zugänglichen Frontseite der Kontaktbauteile 1.

Auf der Unterseite des Kontaktbauteils 1 sind in der Nähe der Anschlußelemente 5 für die abgehenden Leitungen 3 hakenartige Führungselemente 6 angeordnet, zwischen denen die abgehenden Leitungen 3 zur Rückseite des Kontaktbauteils hin verlaufen. An die Unterseite des Kontaktbauteils 1 ist ferner ein sich in der Reihenrichtung der Anschlußelemente 5 erstreckendes Winkelprofil 7 angesetzt, dessen hinterer Schenkel mit der der Frontseite gegenüberliegenden Rückseite des Kontaktbauteils fluchtet. Das Winkelprofil bildet zusammen mit der Unterseite einen zur Frontseite hin offenen Führungskanal 8, in dem die Rangierleitungen im Anschluß an die hakenartigen Führungselemente 6 zu einer Stirnseite 9 des Kontaktbauteils 1 eingeführt sind. Von dort aus können Sie an den Kontaktbauteilen 1 vorbei zu anderen Verteilerbereichen verlegt werden.

## Patentansprüche

1. Kontaktbauteil (1) für einen Verteiler in einer Telekommunikationsanlage,
wobei das längliche Kontaktbauteil (1) mit einer Reihe von frontseitig bedienbaren Anschlußelementen für ankommende und abgehende elektrische Leitungen (2, 3) versehen ist,
wobei zumindest die abgehenden Leitungen (3) als ungebündelte Rangierdrähte ausgebildet sind,
wobei am Kontaktbauteil ein sich in der Reihenrichtung erstreckender, zur Frontseite offener Führungskanal (8) für die abgehenden Leitungen (3) ausgebildet ist,
**dadurch gekennzeichnet,**
**daß** der Führungskanal (8) durch ein Winkelprofil (7) gebildet ist, das im Bereich einer Rückseite des Kontaktbauteils (1) an dessen Gehäuse seitlich angesetzt ist,
**daß** ein schmaler hinterer Schenkel des Winkelprofils (7) senkrecht zur zugehörigen Seitenwand absteht und daß ein Seitenschenkel des Winkelprofils zu Frontseite hin ragt.

2. Kontaktbauteil nach Anspruch 1,
**dadurch gekennzeichnet,**
**daß** in der Nähe des frontseitigen freien Endes des Winkelprofils (7) am Kontaktbauteil (1) seitliche, den Anschlußelementen zugeordnete hakenartige Führungselemente (6) angebracht sind.

3. Kontaktbauteil nach Anspruch 1,
**dadurch gekennzeichnet,**
**daß** die Breite des Führungskanals (8) größer ist als die Höhe der Führungselemente (6).

## Claims

1. Contact component (1) for a distribution board in a telecommunications system,
with the elongated contact component (1) being provided with a row of connecting elements which can be operated from the front for incoming and outgoing electrical lines (2, 3),
with at least the outgoing lines (3) being in the form of unbundled jumper wires,
with a guide channel (8), which extends in the row direction and is open at the front, being formed on the contact component for the outgoing lines (3),
**characterized**
**in that** the guide channel (8) is formed by an angled profile (7) which is fitted at the side in the area of a rear face of the contact component (1) to its housing,
**in that** a narrow rear limb of the angled profile (7) projects at right angles to the associated side wall, and in that one side limb of the angled profile projects towards the front face.

2. Contact component according to Claim 1,
**characterized**
**in that** side hook-like guide elements (6), which are associated with the contact element, are fitted to the contact component (1) in the vicinity of the front free end of the angled profile (7).

3. Contact component according to Claim 1,
**characterized**
**in that** the width of the guide channel (8) is greater than the height of the guide elements (6).

## Revendications

1. Elément de contact (1) pour un répartiteur dans une installation de télécommunication, dans lequel l'élément de contact longitudinal (1) est pourvu d'une rangée d'éléments de connexion actionnables par le devant pour des conducteurs électriques (2, 3) entrant et sortant, au moins les conducteurs sortant (3) étant réalisés sous forme de fils de jonction non mis en faisceau, un conduit de guidage (8) pour les conducteurs sortant (3) ouvert vers l'avant, s'étendant dans la direction des rangées étant réalisé sur l'élément de contact, **caractérisé en ce que** le conduit de guidage (8) est formé par un profilé angulaire (7) qui est ajouté dans la région d'une partie arrière de l'élément de contact (1) latéralement sur son boîtier, **en ce qu'**une branche arrière plus étroite du profilé angulaire (7) dépasse perpendiculairement à la paroi latérale associée et **en ce qu'**une branche latérale du profilé angulaire dépasse vers la face avant.

2. Elément de contact selon la revendication 1, **caractérisé en ce que** des éléments de guidage (6) latéraux, en forme de crochet, associés aux éléments de connexion, sont montés à proximité de l'extrémité libre avant du profilé angulaire (7) sur l'élément de contact (1).

3. Elément de contact selon la revendication 1, **caractérisé en ce que** la largeur du conduit de guidage (8) est plus grande que la hauteur des éléments de guidage (6).
